# EUROPEAN PATENT APPLICATION

(11) **EP 4 592 186 A1**
(43) Date of publication of application: **30.07.2025**
(21) Application number: 25153082.0
(22) Date of filing: 21.01.2025
(51) Int. Cl.: B64D 15/16

(54) **LOW FREQUENCY PIEZOELECTRIC MATRIX DE-ICING SYSTEM**

(30) Priority: 24.01.2024 IN 202441004929; 07.03.2024 US 202418598478
(71) Applicant: Goodrich Corporation, Charlotte, NC 28217-4578 (US)
(72) Inventor: SELVARAJ, Sugumaran, 560067 Bangalore (IN); BOTURA, Galdemir C., Copley, OH, 44321 (US); HU, Jin, Cary, NC, 27513 (US); PATIL, Rhushikesh, 560043 Bengaluru (IN); CHING, Nathaniel, Hartville, OH, 44632 (US); DATTATRI, Shyam Kumar, 560060 Bangalore (IN); HIREMATH, Manjunath, 560073 Bangalore (IN)
(74) Representative: Dehns

(57) **Abstract**

A piezoelectric deicing system is disclosed herein. The piezoelectric deicing system includes a flexible piezoelectric patch array including a plurality of piezoelectric devices (212, 312, 412), the plurality of piezoelectric devices configured to vibrate in response to a voltage applied at a frequency, an protective material (316, 416) surrounding the flexible piezoelectric patch array, wherein the protective material and the flexible piezoelectric patch array are configured to conform to a surface, and a controller (114) operatively coupled to each of the plurality of piezoelectric devices, wherein the controller is configured to operate the plurality of piezoelectric devices over a frequency range for a period of time, the frequency applied to each of the plurality of piezoelectric devices changing by a sweep rate.

## Description

### CROSS-REFERENCE TO RELATED APPLICATIONS

This application claims priority to, and the benefit of, India Patent Application No. 202441004929, filed January 24, 2024 and titled "LOW FREQUENCY PIEZOELECTRIC MATRIX DE-ICING SYSTEM," and US application no. 18/598,478 filed 7 March 2024.

### FIELD

The present disclosure generally relates de-icing aircraft wings, and more particularly, to de-icing aircraft wings using piezoelectric devices

### BACKGROUND

Aircraft rely on the specific geometric design of the wings for providing lift and controlling the aircraft. Ice tends to build up on the wings of aircraft during the winter and while flying at high elevations. Existing aircraft de-icing systems typically rely on heat to remove and/or prevent ice build up. These systems tend to use large amounts of electricity to heat the wings of the aircraft to remove ice build up. Electro-mechanical systems exist but are complex to build and tend to not efficiently remove ice build up.

### SUMMARY

Disclosed herein is a piezoelectric deicing system including a flexible piezoelectric patch array including a plurality of piezoelectric devices, the plurality of piezoelectric devices configured to vibrate in response to a voltage applied at a frequency, an protective material surrounding the flexible piezoelectric patch array, the protective material and the flexible piezoelectric patch array are configured to conform to a surface, and a controller operatively coupled to each of the plurality of piezoelectric devices. The controller is configured to operate the plurality of piezoelectric devices over a frequency range for a period of time, the frequency applied to each of the plurality of piezoelectric devices changing by a sweep rate.

In various embodiments, the piezoelectric deicing system further includes a first row of piezoelectric devices of the plurality of piezoelectric devices, and a second row of piezoelectric devices of the plurality of piezoelectric devices. The controller is further configured to operate the first row of piezoelectric devices at a first frequency and operate the second row of piezoelectric devices at a second frequency that is 180° shifted from the first frequency.

In various embodiments, the frequency range is a low-frequency range. In various embodiments, the low-frequency range is about 0.001 kHz to about 5 kHz. In various embodiments, the sweep rate is about 0.1 kHz/second to about 1 kHz/second. In various embodiments, the period of time is about 2 seconds to about 5 seconds. In various embodiments, the piezoelectric deicing system further includes a function generator operatively coupled to the controller and the flexible piezoelectric patch array, the function generator is configured to control the sweep rate of piezoelectric patch array.

Also disclosed herein is an aircraft including a wing having a leading edge and a piezoelectric deicing system coupled to the leading edge. The piezoelectric deicing system includes a plurality of piezoelectric devices, the plurality of piezoelectric devices configured to vibrate in response to a voltage applied at a frequency, an protective material surrounding the plurality of piezoelectric devices, the protective material and the plurality of piezoelectric devices are configured to conform to the leading edge of the wing, and a controller operatively coupled to each of the plurality of piezoelectric devices, the controller is configured to operate the plurality of piezoelectric devices over a frequency range for a period of time, the frequency applied to each of the plurality of piezoelectric devices changes at a sweep rate.

In various embodiments, the piezoelectric deicing system further includes a first row of piezoelectric devices of the plurality of piezoelectric devices, and a second row of piezoelectric devices of the plurality of piezoelectric devices. The controller is further configured to operate the first row of piezoelectric devices at a first frequency and operate the second row of piezoelectric devices at a second frequency that is 180° shifted from the first frequency.

In various embodiments, the piezoelectric deicing system further includes a function generator configured to output the frequency at the sweep rate. In various embodiments, the frequency is about 0.001 kHz to about 5 kHz. In various embodiments, the sweep rate is about 0.1 kHz/second to about 1 kHz/second. In various embodiments, the period of time is about 2 seconds to about 5 seconds. In various embodiments, the plurality of piezoelectric devices are oriented at an angle to the leading edge of the wing, the angle being about 10° to about 60°.

Also disclosed herein is a piezoelectric deicing system including a first row of piezoelectric patch arrays, a second row of piezoelectric patch arrays, a first row control line operatively coupled to each of the piezoelectric patch arrays in the first row and the second row, and a controller operatively coupled to the first row control line, the controller configured to provide a first frequency to the first row of piezoelectric patch arrays and provide a second frequency to the second row of piezoelectric patch arrays.

In various embodiments, the first frequency is offset from the second frequency by an offset phase. In various embodiments, the offset phase is about 10° to about 180°. In various embodiments, the first frequency is about 0.001 kHz to about 5 kHz. In various embodiments, the controller is further configured to output the first frequency by sweeping over a frequency range at a sweep rate. In various embodiments, the sweep rate is about 0.1 kHz/s to about 1 kHz/s.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft including a piezoelectric deicing assembly on the wings, in accordance with various embodiments.
FIGS. 2A and 2B illustrate piezoelectric deicing assemblies on the surfaces of a wing, in accordance with various embodiments.
FIGS. 3A and 3B illustrate a configuration of a piezoelectric deicing assembly for use on a wing, in accordance with various embodiments.
FIGS. 4A and 4B illustrate a configuration of a piezoelectric deicing assembly for use on a wing, in accordance with various embodiments.
FIG. 5 illustrates a system diagram of a piezoelectric deicing system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Existing ice protection systems for aircraft may not be compatible with future all-electric aircraft. The convention thermal systems use a large amount of electricity which tends to decrease the range of all-electric aircraft. The conventional electro-mechanical systems tend to be complex to build and tend to not provide sufficient and/or efficient ice shedding from the aircraft. Furthermore, conventional de-icing systems tend to be difficult to customize to different applications and tend to be difficult to conform to critical surfaces.

Disclosed herein is a piezoelectric de-icing system. In various embodiments, the piezoelectric de-icing system disclosed herein may be flexible to easily conform to different surfaces of the aircraft. In various embodiments, the piezoelectric de-icing system includes a plurality of piezoelectric devices arranged in a flexible matrix (i.e., able to physically flex and conform to control surfaces of the aircraft). In various embodiments, the flexible matrix may be divided into a plurality of rows and/or columns, or arrays, of piezoelectric devices.

In various embodiments, the plurality of piezoelectric devices are configured to vibrate to break up and remove ice buildup on the aircraft. In various embodiments, the plurality of piezoelectric devices vibrate in response to an electric frequency input. In various embodiments, the electric frequency input may be a low frequency input of about 1 Hz to about 5,000 Hz. In various embodiments, each of the arrays of the plurality of arrays may be phase shifted from an adjacent array of the plurality of arrays. That is, in various embodiments, the electric frequency input of each array may be phase shifted from the adjacent electric frequency input by about 1° to about 180° to form a vibrating wave across the plurality of arrays.

In various embodiments, the plurality of piezoelectric devices may be arranged in prestressed patches. In various embodiments, the plurality of piezoelectric devices may be encapsulated in a protected material. In various embodiments, the protective material may provide additional protection from environmental hazards (e.g., solar, wind, ice, bird strike, etc.). In various embodiments, the piezoelectric system may be wrapped around aircraft surfaces such as wing leading edges, stabilizers, engine inlets, and propeller cones, among others. In various embodiments, the piezoelectric system may be secured to the aircraft surfaces by an adhesive or clamps, among others. In various embodiments, each of the plurality of piezoelectric devices may be rotated with respect to other piezoelectric devices to improve shear and tensile stress for improved ice removal.

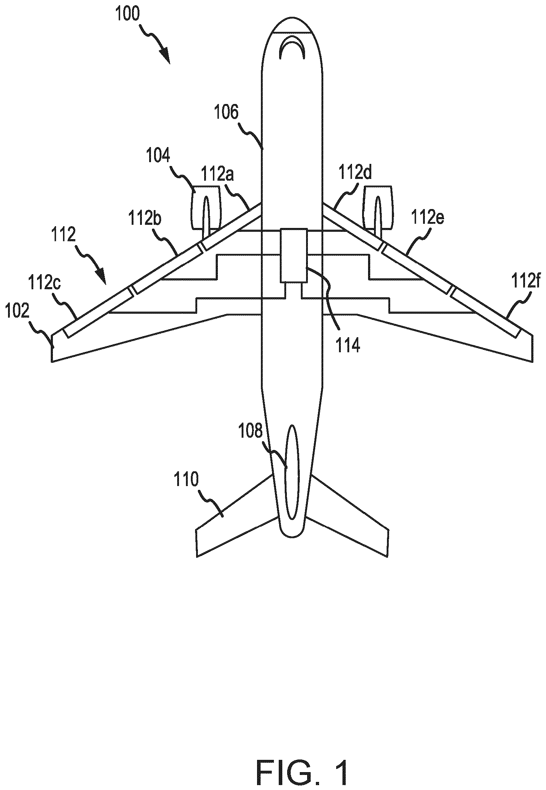

Referring now to FIG. 1, a top view of an aircraft 100 is illustrated, in accordance with various embodiments. Aircraft 100 includes wings 102, engines 104, a fuselage 106, a vertical stabilizer 108, and horizontal stabilizers 110, among other control surfaces. Aircraft 100 further includes a plurality of deicing assemblies 112 including deicing assemblies 112a, 112b, 112c on a first wing 102 and deicing assemblies 112d, 112e, 112f on a second wing 102. In various embodiments, deicing assemblies 112 may be located on a leading edge of each wing 102 (as illustrated in FIG. 1) to prevent the build up of ice on the leading edge of each wing 102. In various embodiments, deicing assemblies 112a, 112d may be located at a proximal end of wings 102 adjacent fuselage 106, deicing assemblies 112c, 112f may be located at a distal end of wings 102, and deicing assemblies 112b, 112e may be located between deicing assemblies 112a, 112d and deicing assemblies 112c, 112f, respectively.

In various embodiments, deicing assemblies 112 may be located on an external surface of wings 102. In various embodiments, deicing assemblies 112 may be located on an internal surface of wings 102. In various embodiments, deicing assemblies 112 may be, additionally or in the alternative, coupled to an external surface and/or an internal surface of a leading edge of engines 104, fuselage 106, vertical stabilizer 108, horizontal stabilizers 110, and/or other control surfaces of aircraft 100. For simplicity and ease of discussion, deicing assemblies 112 will be described as being coupled to the leading edge of wings 102, though other locations are considered.

In various embodiments, each of the deicing assemblies 112a-112f may be individually coupled to a controller 114. In various embodiments, controller 114 may comprise one or more processors configured to implement various logical operations in response to execution of instructions, for example, instructions stored on a non-transitory, tangible, computer-readable medium. The one or more processors can be a general-purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. In various embodiments, controller 114 may further comprise memory to store data, executable instructions, system program instructions, and/or controller instructions to implement the control logic of controller 114.

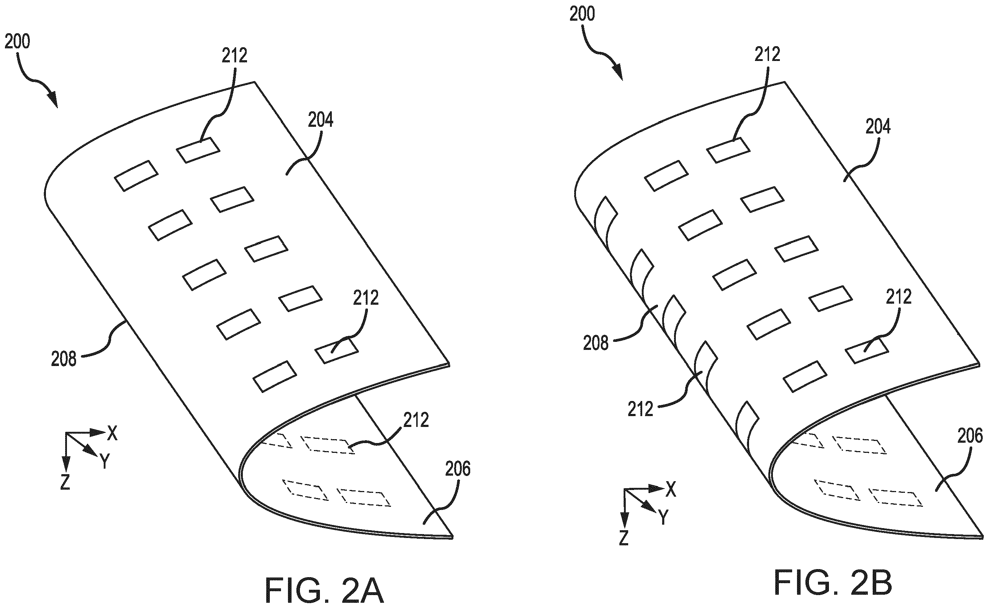

Referring now to FIGS. 2A and 2B, an aircraft surface 200, also referred to as control surface including a plurality of flexible piezoelectric patch (PEP) arrays 212. In various embodiments, aircraft surface 200 may be wing 102, engine 104, fuselage 106, vertical stabilizer 108, and/or horizontal stabilizer 110, among other control surfaces. In various embodiments, PEP arrays 212 may be examples of deicing assemblies 112 described above in FIG. 1. Aircraft surface includes a top surface 204, a bottom surface 206, and a leading edge 208. FIG. 2A illustrates a first configuration of PEP arrays 212 disposed on aircraft surface 200 including two rows of PEP arrays 212 on top surface 204 and two rows of PEP arrays 212 on bottom surface 206. FIG. 2B illustrates a second configuration of PEP arrays 212 on aircraft surface 200 including two rows of PEP arrays 212 on top surface, two rows of PEP arrays 212 on bottom surface, and one row of PEP arrays 212 on leading edge 208.

In various embodiments, the PEP arrays 212 on aircraft surface 200 may be controlled and operated as a single unit. In various embodiments, the PEP arrays 212 on aircraft surface 200 may be controlled and operated individually. In various embodiments, the PEP arrays 212 may be grouped into assemblies, or zones, (e.g., deicing assemblies 112) and be controlled as an assembly, or zone. In various embodiments, the PEP arrays 212 may be grouped laterally (e.g., in y-axis). In various embodiments, the PEP arrays 212 may be groups longitudinally (e.g., in the x-axis).

In various embodiments, a low ice adhesion (LIA) coating may also be applied to exposed exterior portions of aircraft surface 200 including at least one of top surface 204, bottom surface 206, or leading edge 208. In various embodiments, the LIA coating may be a hydrophobic coating or a superhydrophobic coating, among others. In various embodiments, the LIA coating may include materials such as polystyrene, carbon nano tubes (CNT), or silica nano, among others. In various embodiments, the LIA coating helps to reduce the ice adhesion to surface and hence, provides easier deicing with activation of the PEP arrays 212.

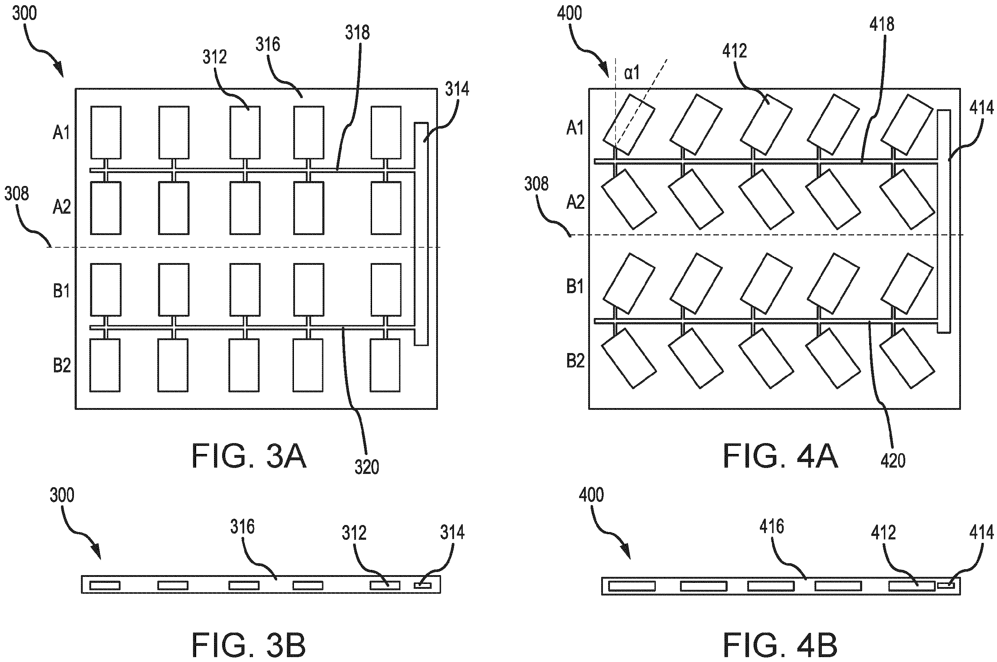

Referring now to FIGS. 3A and 3B, a deicing assembly 300 is illustrated, in accordance with various embodiments. Deicing assembly 300 includes a plurality of piezoelectric patch (PEP) arrays 312, a control line 314, and a protection material 316. In various embodiments, deicing assembly 300 may be an example of deicing assembly 112 described above in FIG. 1. FIG. 3A illustrates a cross sectional top view of deicing assembly 300 and FIG. 3B illustrates a cross sectional side view of deicing assembly 300.

In various embodiments, deicing assembly 300, including the PEP arrays 312 and protection material 316, may be flexible, allowing deicing assembly 300 to conform an aircraft control surface such as wing 102, engine 104, fuselage 106, vertical stabilizer 108, and/or horizontal stabilizer 110, among others. In various embodiments, protection material 316 may include epoxy, polyimide, polyamide, polyaryletherketones, polyacrylate, polychloroprene, silicone, and/or urethane, among others.

Deicing assembly 300, as illustrated in FIG. 3A and in various embodiments, may include a first row A1 of PEP arrays 312, a second row A2 of PEP arrays 312, a third row B1 of PEP arrays 312, and a fourth row B2 of PEP arrays 312. The PEP arrays 312 of first row A1 and second row A2 are operatively coupled to control line 314 by a first row control line 318. The PEP arrays 312 of third row B1 and fourth row B2 are operatively coupled to control line 314 by a second row control line 320. In various embodiments, a controller (e.g., controller 114) may control each of the PEP arrays 312 in first row A1 separately or together and control each of the PEP arrays 312 in second row A2 separately or together. In various embodiments, the controller may control, via control line 314 and first row control line 318, first row A1 and second row A2 separately or together. In various embodiments, a controller may control, via control line and second row control line 320, each of the PEP arrays 312 in third row B1 separately or together and control each of the PEP arrays 312 in fourth row B2 separately or together. In various embodiments, the controller may control third row B1 and fourth row B2 separately or together.

In various embodiments, a center line 308 of deicing assembly 300 may be placed over leading edge 208 of aircraft surface 200 with first row A1 and second row A2 being coupled to top surface 204 and third row B1 and fourth row B2 being coupled to bottom surface 206. Deicing assembly 300 as illustrated in FIG. 3A is an exemplary configuration and is not intended to be limiting, but is used for ease of description. Other configurations of deicing assembly 300 including number, size, and locations of PEP arrays 312 are possible.

The controller provides a first input frequency to the PEP arrays 312 of first row A1 and a second input frequency to the PEP arrays 312 of second row A2. In various embodiments, the first input frequency and the second input frequency may be the same frequency. In various embodiments, the first input frequency and the second input frequency may be offset by an offset phase. In various embodiments, the first frequency and the second frequency may be a low frequency. In various embodiments, the first frequency and the second frequency may be 0.001 Hz to about 10,000 Hz, and more specifically, about 100 Hz to about 5,000 Hz. In various embodiments, the offset phase may be about 0° to about 180°. Deicing assembly 300 may create a vibration wave to break up ice build up in response to the first input frequency and the second input frequency being offset by the offset phase.

In various embodiments, the controller may sweep the first input frequency and/or the second input frequency through a frequency range at a sweep rate. The sweep rate is a measurement of change in frequency over time. In various embodiments, the sweeping frequency may appear as a sine wave, a square wave, or a triangle wave, among others. In various embodiments, the frequency range may be about 0.001 Hz to about 10,000 Hz, and more specifically, about 100 Hz to about 5,000 Hz. In various embodiments, the sweep rate may be about 0.1 kHz/s to about 1 kHz/s, and more specifically, about 0.2 kHz/s to about 0.9 kHz/s.

The controller provides a third input frequency to the PEP arrays 312 of first third B1 and a fourth input frequency to the PEP arrays 312 of fourth row B2. In various embodiments, the third input frequency and the fourth input frequency may be the same frequency. In various embodiments, the third input frequency may be the same as the first input frequency and the fourth input frequency may be the same as the second input frequency. In various embodiments, each the first input frequency, second input frequency, third input frequency, and fourth input frequency may be offset from each by the offset phase.

In various embodiments, a low ice adhesion (LIA) coating may also be applied to exposed exterior portions of protection material 316. In various embodiments, the LIA coating may be a hydrophobic coating or a superhydrophobic coating, among others. In various embodiments, the LIA coating may include materials such as polystyrene, carbon nano tubes (CNT), or silica nano, among others. In various embodiments, the LIA coating helps to reduce the ice adhesion to surface and hence, provides easier deicing with activation of the PEP arrays 312.

Referring now to FIGS. 4A and 4B, a deicing assembly 400 is illustrated, in accordance with various embodiments. Deicing assembly 400 includes similar components to deicing assembly 300 including a center line 408, a plurality of piezoelectric patch (PEP) arrays 412, a control line 414, a protection material 416, a control line 414, a first row control line 418, and a second row control line 420, descriptions of which may not be repeated below.

Deicing assembly 400 further has an offset angle α1 for each PEP array 412. In various embodiments, offset angle α1 may be with respect to first row control line 418 or second row control line 420. In various embodiments, offset angle α1 may be with respect to a longitudinal axis (e.g., the x-axis) or an axial axis (e.g., the y-axis) of control surface 200. In various embodiments, offset angle α1 may be about 0° to about 70°, and more specifically, about 10° to about 60°. In various embodiments, each row of PEP arrays 412 may have a different offset angle α1. The angle used for offset angle α1 may depend on a number of factors including the type of control surface and the location on the control surface, among others. Angling PEP arrays 412 tends to increase the shear stress and/or tensile stress induced by PEP arrays 412 on the ice built up on control surface 200.

In various embodiments, a low ice adhesion (LIA) coating may also be applied to exposed exterior portions of protection material 416. In various embodiments, the LIA coating may be a hydrophobic coating or a superhydrophobic coating, among others. In various embodiments, the LIA coating may include materials such as polystyrene, carbon nano tubes (CNT), or silica nano, among others. In various embodiments, the LIA coating helps to reduce the ice adhesion to surface and hence, provides easier deicing with activation of the PEP arrays 412.

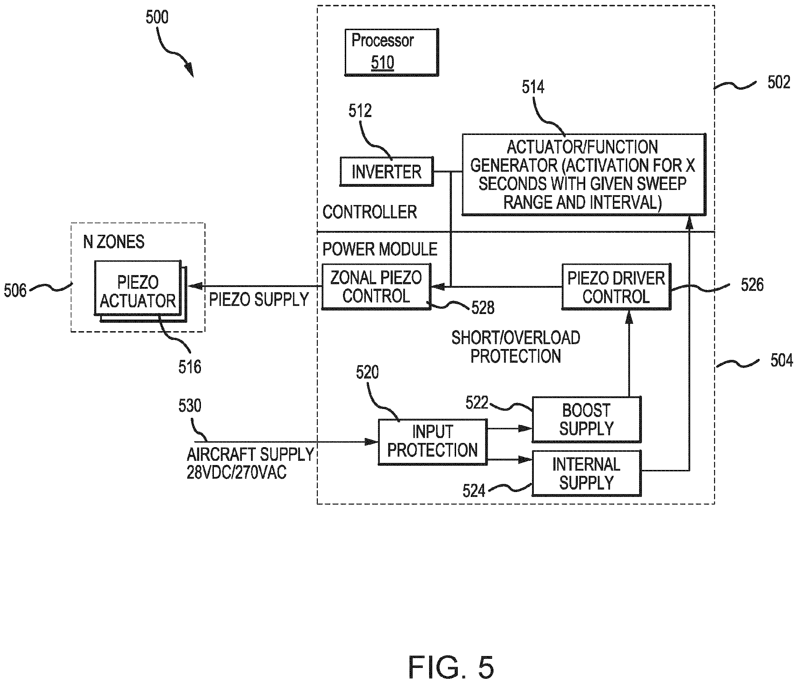

Referring now to FIG. 5, a system diagram of a piezoelectric deicing system 500 is illustrated, in accordance with various embodiments. System 500 includes a controller 502, a power module 504, and a plurality of piezoelectric patch (PEP) arrays 506 arranged into zones. Controller 502 includes a processor 510, an inverter 512, and a function generator 514. Function generator 514 provides a frequency output and a sweep rate that are provided to PEP arrays 506. Inverter 512 may be used to invert the output of function generator 514 to provide an offset phase (e.g., 180°) to PEP arrays 506, as previously described. PEP arrays 506 includes one or more piezo actuators 516.

Power module 504 includes an input protection 520, a boost power supply 522, an internal power supply, 524, a piezo driver control 526, and a zonal piezo control 528. Input protection 520 receives a power input 530 from the aircraft (e.g., aircraft 100) and outputs a power output to boost power supply 522 and internal power supply 524. In various embodiments, power input 530 may be about 18 VDC to about 96 VDC, and more specifically, about 28 VDC. In various embodiments, power input 530 may be about 120 VAC to about 380 VAC, and more specifically, about 200 VAC to about 300 VAC. Input protection 520 protects system 500 from voltage and/or current surges from power input 530.

Internal power supply 524 provides power to the internal components of system 500 including processor 510, function generator 514, and inverter 512. Boost power supply 522 provides a voltage boosted power output to piezo driver control 526. Piezo driver control 526 provides power output to each of the one or more piezo actuators 516 of PEP arrays 506. More specifically, piezo driver control 526 is combined with the output of function generator 514 to provide power and frequency input to zonal piezo control 528. Zonal piezo control 528 drives each of the one or more piezo actuators 516. Processor 510, in various embodiments, controls each function generator 514, piezo driver control 526, and zonal piezo control 528.

Processor 510 may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. Processor 510 may further comprise memory to store data, executable instructions, system program instructions, and/or controller instructions to implement the control logic of processor 510.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A piezoelectric deicing system, comprising:
a flexible piezoelectric patch array including a plurality of piezoelectric devices (212, 312, 412), the plurality of piezoelectric devices configured to vibrate in response to a voltage applied at a frequency;
a protective material (316, 416) surrounding the flexible piezoelectric patch array, wherein the protective material and the flexible piezoelectric patch array are configured to conform to a surface; and
a controller (114) operatively coupled to each of the plurality of piezoelectric devices,
wherein the controller is configured to operate the plurality of piezoelectric devices over a frequency range for a period of time, the frequency applied to each of the plurality of piezoelectric devices changing by a sweep rate.

2. The piezoelectric deicing system of claim 1, further comprising:
a first row (A1) of piezoelectric devices of the plurality of piezoelectric devices; and
a second row (A2) of piezoelectric devices of the plurality of piezoelectric devices,
wherein the controller is further configured to operate the first row of piezoelectric devices at a first frequency and operate the second row of piezoelectric devices at a second frequency that is 180° shifted from the first frequency.

3. The piezoelectric deicing system of claim 1 or 2, wherein the frequency range is a low-frequency range.

4. The piezoelectric deicing system of claim 3, wherein the low-frequency range is about 0.001 kHz to about 5 kHz.

5. The piezoelectric deicing system of any preceding claim, wherein the sweep rate is about 0.1 kHz/second to about 1 kHz/second.

6. The piezoelectric deicing system of any preceding claim, further comprising a low ice adhesion, LIA, coating applied to an exterior portion of the protective material.

7. The piezoelectric deicing system of any preceding claim, further comprising:
a function generator (514) operatively coupled to the controller and the flexible piezoelectric patch array, wherein the function generator is configured to control the sweep rate of piezoelectric patch array.

8. An aircraft, comprising:
a wing (102) having a leading edge (208); and
a piezoelectric deicing system (112) as claimed in any preceding claim coupled to the leading edge.

9. The aircraft of claim 8, wherein the period of time is about 2 seconds to about 5 seconds.

10. The aircraft of claim 8 or 9, wherein the plurality of piezoelectric devices are oriented at an angle to the leading edge of the wing, the angle being about 10° to about 60°.

11. A piezoelectric deicing system, comprising:
a first row (A1) of piezoelectric patch arrays (312);
a second row (A2) of piezoelectric patch arrays (312) ;
a first row control line (318) operatively coupled to each of the piezoelectric patch arrays in the first row and the second row; and
a controller (114) operatively coupled to the first row control line, the controller configured to provide a first frequency to the first row of piezoelectric patch arrays and provide a second frequency to the second row of piezoelectric patch arrays.

12. The system of claim 11, wherein the first frequency is offset from the second frequency by an offset phase, and optionally wherein the offset phase is about 10° to about 180°.

13. The system of claim 1511 or 12 wherein the first frequency is about 0.001 kHz to about 5 kHz.

14. The system of claim 11, 12 or 13, wherein the controller (114) is further configured to output the first frequency by sweeping over a frequency range at a sweep rate.

15. The system of claim 14, wherein the sweep rate is about 0.1 kHz/s to about 1 kHz/s.
